Europäisches Patentamt

European Patent Office

Office européen des brevets

(19)

(11) Veröffentlichungsnummer : **0 013 659**
**B1**

(12) EUROPÄISCHE PATENTSCHRIFT

(45) Veröffentlichungstag der Patentschrift : 24.08.83

(51) Int. Cl.³ : **C 02 F 1/26**

(21) Anmeldenummer : 80810001.0

(22) Anmeldetag : 04.01.80

(54) Verfahren zur Extraktion von halogen-haltigen Kohlenwasserstoffen aus Wasser.

(30) Priorität : 08.01.79 CH 130/79

(43) Veröffentlichungstag der Anmeldung : 23.07.80 Patentblatt 80/15

(45) Bekanntmachung des Hinweises auf die Patenterteilung : 24.08.83 Patentblatt 83/34

(84) Benannte Vertragsstaaten :
BE CH DE FR GB IT NL

(56) Entgegenhaltungen :
DE A 2 233 341
DE B 1 072 567
FR A 2 137 648
FR A 2 277 043
GB A 714 904
US A 3 617 546

CHEMICAL ABSTRACTS, Band 90, Nr. 26, 25. Juni 1979, Zusammenfassung Nr. 209497v, Seite 351, Columbus, Ohio, US, ENVIRONMENTAL CHEMISTRY LAB. ACAD. SINICA : « Solvent extraction treatment of phenol-containing phosphorous insecticide waste water »

CHEMICAL ABSTRACTS, Band 82, Nr. 23, 9. Juni 1975, Zusammenfassung Nr. 159961d, Seite 248, Columbus, Ohio, US, A.V. KUZEVANOVA et al. : « Removal of nitrobenzene from waste waters by extraction and azeotropic distillation »

(73) Patentinhaber : CIBA-GEIGY AG
Patentabteilung Postfach
CH-4002 Basel (CH)

(72) Erfinder : Mindermann, Fritz, Dr.
Schlossberg 9
D-7889 Grenzach (DE)
Erfinder : Bauer, Walter, Dr.
Erlenweg 16
D-7889 Grenzach-Wyhlen 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 013 659 B1

## Verfahren zur Extraktion von halogenhaltigen Kohlenwasserstoffen aus Wasser

Halogenhaltige Kohlenwasserstoffe, die an sich mit Wasser nicht mischbar sind, werden jedoch in messbaren Anteilen im Wasser gelöst oder suspendiert. Derartig verunreinigte Wasser, z. B. Abwasser, wie es zum Beispiel bei der Wasserdampfdestillation organischer Lösungsmittel anfällt, ist nicht willkommen und selbst im Zulauf einer Kläranlage äusserst unerwünscht.

Aufgabe der vorliegenden Erfindung ist die Eliminierung dieser Verunreinigung aus Wasser insbesondere aus dem Abwasser z. B. vor dem Eintritt in die biologische Kläranlage. Als bekannte Methode kommt beispielsweise die Absorption an Aktivkohle in Frage. Dies ist jedoch ein aufwendiges Verfahren, weil die Aufnahmefähigkeit der Aktivkohle begrenzt ist und die Regenerierung mit erheblichen Kosten verbunden ist.

Zur Lösung der vorgenannten Aufgabe dient erfindungsgemäss ein Verfahren zur Extraktion von halogenhaltigen Kohlenwasserstoffen aus Wasser, insbesondere aus Abwässern, welches dadurch gekennzeichnet ist, dass man als Extraktionsmittel aliphatische Kohlenwasserstoffe mit einem mittleren Molekulargewicht von 130 bis 450 und einem Siedebereich von 180 bis 380 °C verwendet.

Beispiele für in Frage kommende Extraktionsmittel sind Paraffinöl und Weissöl. Bevorzugte aliphatische Kohlenwasserstoffe haben ein mittleres Molekulargewicht von 140 bis 250 und einen Siedebereich von 180 bis 380 °C. vorzugsweise 190 bis 250 °C. Besonders bevorzugt sind Paraffinöle, die einen Stockpunkt von unter − 15 °C und einen Siedebereich von über 350 °C aufweisen.

Mit Hilfe der absorptionsfähigen Kohlenwasserstoffe lassen sich Abwässer von den eingangs genannten Stoffen weitgehend befreien, die in der Textil- und Faserindustrie und bei der chemischen Reinigung anfallen, wie Restflotten, Abfallflüssigkeiten, Spül- oder Waschwässer. Insbesondere kommen Abwässer in Betracht, die bei der Wasserdampfdestillation halogenhaltiger organischer Lösungsmittel entstehen. Je nach Umständen kann das erfindungsgemässe Verfahren auch zur Reinigung von Brauchwasser verwendet werden.

Als halogenhaltige Lösungsmittel können Wasser bzw. die Abwässer bromierte, fluorierte oder chlorierte aliphatische Kohlenwasserstoffe enthalten wie zum Beispiel Methylenchlorid, Chloroform, Tetrachlorkohlenstoff, Methylenbromid, Dichloräthan, Trichloräthan, Trichloräthylen, Tetrachloräthan, Perchloräthylen, Pentachloräthan, Chlorpropan, Dichlorpropan, Trichlorpropan, Chlorbutan, Dichlorbutan, 1-Chlor-2-methylpropan, Dichlorhexan, sowie Perfluor-n-hexan, Trifluor-tri-chloräthan, Trifluorpentachlorpropan und Octafluorcyclobutan. Insbesondere werden Wasser bzw. Abwässer gereinigt, die als halogenhaltige Lösungsmittel aromatische Halogenkohlenwasserstoffe wie zum Beispiel Chlorbenzol, Dichlorbenzol, Trichlorbenzol, Fluorbenzol, Chlortoluol und Benzotrifluorid enthalten. Bevorzugt wird, dass man ein Chlorbenzol enthaltendes Abwasser verwendet, das zum Beispiel bei der Phasentrennung von Chlorbenzol und Wasser nach einer Wasserdampfdestillation erhalten worden ist.

Die Behandlung des Wassers bzw. der Abwässer mit den definitionsgemässen Kohlenwasserstoffen kann bis zu einer Temperatur, die unter dem Siedepunkt des zu entfernenden Stoffes liegt, vorgenommen werden. Vorzugsweise erfolgt sie bei einer Temperatur von 10 bis 80 °C und insbesondere bei Raumtemperatur (15 bis 30 °C). Der pH-Wert der Abwässer kann in weiten Grenzen variieren, z. B. zwischen 2 bis 12. In der Regel werden Abwässer behandelt, die einen pH-Wert von 6 bis 8 aufweisen.

Die Konzentration der erfindungsgemäss zu entfernenden Verunreinigungen in Wasser bzw. in den Abwässern kann ebenfalls in weiten Grenzen variieren. Normalerweise kommen gewerbliche oder industrielle Abwässer in Betracht, die 0,1 bis 1 g halogen- oder nitrogruppenhaltige Kohlenwasserstoffe oder Gemische davon pro Liter Abwasser enthalten.

Das gemäss der Erfindung verwendete Extraktionsmittel wird dem zu behandelnden Wasser vorzugsweise in flüssiger Form zugesetzt. Zweckmässigerweise wird das Extraktionsmittel in einer Menge von 1 bis 10 g pro Liter Wasser eingesetzt.

Das erfindungsgemässe Verfahren kann diskontinuierlich, semikontinuierlich oder kontinuierlich durchgeführt werden, wobei die letzteren zwei Varianten bevorzugt werden. Vorteilhafterweise eignet sich das sogenannte Festbett-Verfahren, wobei die zu reinigenden Abwässer durch das Extraktionsmaterial geführt werden. Dabei können vor allem folgende drei apparative Varianten in Betracht kommen:

1. Der Behandlungsapparat wird mit der Extraktionseinrichtung fest verbunden.

2. Die Extraktionseinrichtung ist beweglich und kann nach Bedarf mit jeder Behandlungsapparatur gekoppelt werden.

3. Die aus den Behandlungsflotten entstammenden Abwässer werden in einem geeigneten Behälter vereinigt und hierauf gemeinsam durch das Extraktionsmaterial geführt.

Insbesondere eignet sich eine flüssig-flüssig Extraktion, wobei die unpolaren, erfindungsgemäss verwendeten Kohlenwasserstoffe mit dem Abwasser die erforderliche Mischungslücke haben.

Durch geeignete Wahl des Extraktionsmittels können erfindungsgemäss 80 bis 95 Gew.% der ursprünglich in den Abwässern vorliegenden Verunreinigungen entfernt werden.

In Fällen, in denen es nicht gelingt, eine ausreichende Entfernung der Verunreinigungen zu erzielen, empfiehlt es sich, den Reinigungsvorgang zu wiederholen oder ein mehrstufiges System zu verwenden.

Die erfindungsgemässe Behandlung der verunreinigten flüssigen Medien mit den definitionsgemässen Kohlenwasserstoffen kann wahlweise auch nur Teil eines Reinigungs- oder Rückgewinnungsprozesses sein. Gewisse Abwasserbehandlungen können über mehrere Stufen durchgeführt werden, wobei bei einer der Arbeitsstufen die genannten Kohlenwasserstoffe als Extraktionsmittel eingesetzt werden können.

Nach der Extraktion der Verunreinigungen kann die Extraktionskapazität der verwendeten aliphatischen Kohlenwasserstoffe teilweise oder ganz zurückgewonnen werden, beispielsweise durch Wasserdampfdestillation oder Extraktivdestillation, wobei auch die extrahierten Materialien abgetrennt werden können.

In den Beispielen sind Prozente Gewichtsprozente und Teile Gewichtsteile.

Beispiel 1

Ein U-förmiges Glasrohr mit 8 mm Durchmesser wird mit 2,5 g Paraffinöl gefüllt. Hierauf lässt man bei Raumtemperatur durch das Rohr 0,03 Gew.% Chlorbenzol enthaltendes Abwasser bei einer Geschwindigkeit von 1,2 Liter pro Stunde fliessen. Man erhält Abwasser, das nur 0,01 Gew.% Chlorbenzol enthält.

Beispiel 2

Ein Extraktionsgefäss von 75 mm Durchmesser wird zu einem Drittel mit 10 g Paraffinöl gefüllt. Hierauf lässt man 0,013 Gew.% Chlorbenzol enthaltendes Abwasser bei Raumtemperatur und einer Geschwindigkeit von 1,2 l/h durchlaufen. Man erhält Abwasser, das nur 0,002 Gew.% Chlorbenzol enthält. Die Chlorbenzolkonzentration des Paraffinöls beträgt danach 5,7 Gew.% Chlorbenzol, berechnet auf trockenes Paraffinöl.

Beispiel 3

Durch die gleiche Anordnung wie in Beispiel 2, die jedoch aus zwei gleichen Stufen besteht, lässt man ein Abwasser laufen, das 200 mg/l 1,2-Dichloräthan enthält. Man erhält ein Abwasser, das nur noch 100 mg/l enthält. Bei Verwendung weiterer Stufen wird eine weitere Verringerung erhalten.

Beispiel 4

Mit der gleichen Anordnung wie in Beispiel 3 wird ein chlorbenzolhaltiges (290 mg/l) Abwasser mittels eines aliphatischen Kohlenwasserstoffes mit einem mittleren Molekulargewicht von 170 (Siedebereich 190-250 °C, Dichte 0,78 bei 20 °C, Flammpunkt 68-72 °C), auf ebenfalls 100 mg/l reduziert.

Beispiel 5

Mit der gleichen Anordnung wie in Beispiel 3 wird ein Abwasser, das 39 mg/l Chlorbenzol enthält, mit Weissöl auf einen Gehalt von < 6 mg/l Chlorbenzol reduziert.

Ansprüche

1. Verfahren zur Extraktion von halogenhaltigen Kohlenwasserstoffen aus Wasser, dadurch gekennzeichnet, dass man als Extraktionsmittel aliphatische Kohlenwasserstoffe mit einem mittleren Molekulargewicht von 130 bis 450 und einem Siedebereich von 180 bis 380 °C verwendet.

2. Verfahren gemäss Anspruch 1, dadurch gekennzeichnet, dass die als Extraktionsmittel verwendbaren Kohlenwasserstoffe einen Siedebereich von 190 bis 250 °C aufweisen.

3. Verfahren gemäss einem der Ansprüche 1 und 2, dadurch gekennzeichnet, dass man als Extraktionsmittel Paraffinöle verwendet.

4. Verfahren gemäss einem der Ansprüche 1 bis 3, dadurch gekennzeichnet, dass das zu reinigende Wasser Abwasser ist, das aromatische Halogen-Kohlenwasserstoffe enthält.

5. Verfahren gemäss Anspruch 4, dadurch gekennzeichnet, dass die Abwässer Chlorbenzol enthalten.

Claims

1. A method of extracting halogenated hydrocarbons from water, which comprises using as extraction agents aliphatic hydrocarbons having an average molecular weight of 130 to 450 and a boiling range from 180° to 380 °C.

2. A method according to claim 1, wherein the hydrocarbons employed as extraction agents have a boiling range from 190° to 250 °C.

3. A method according to either claim 1 or claim 2, wherein paraffin oils are used as extraction agents.

4. A method according to any one of claims 1 to 3, wherein the water to be purified is wastewater which contains aromatic halogenated hydrocarbons.

5. A method according to claim 4, wherein the wastewater contains chlorobenzene.

Revendications

1. Procédé pour l'extraction d'hydrocarbures halogénés de l'eau, caractérisé par le fait qu'on utilise comme produit d'épuisement des hydrocarbures aliphatiques ayant un poids moléculaire moyen compris entre 130 et 450 et une plage d'ébullition comprise entre 180 et 380 °C.

2. Procédé selon la revendication 1, caractérisé par le fait que les hydrocarbures utilisables comme produit d'épuisement ont une plage d'ébullition entre 190 et 250 °C.

3. Procédé selon l'une des revendications 1 et 2, caractérisé par le fait qu'on utilise comme produit d'épuisement l'huile de paraffine.

4. Procédé selon l'une des revendications 1 à 3, caractérisé par le fait que l'eau à purifier est constituée par des eaux résiduaires qui contiennent des hydrocarbures halogénés aromatiques.

5. Procédé selon la revendication 4, caractérisé par le fait que les eaux résiduaires contiennent du chlorobenzène.